## Europäisches Patentamt

## European Patent Office

## Office européen des brevets

(19)

(11) Veröffentlichungsnummer: **0 097 384**
**B1**

(12) # EUROPÄISCHE PATENTSCHRIFT

(45) Veröffentlichungstag der Patentschrift:
**28.01.87**

(51) Int. Cl.⁴: **G 02 F 1/133**

(21) Anmeldenummer: **83200608.4**

(22) Anmeldetag: **29.04.83**

(54) **Flüssigkristallanzeigevorrichtung.**

(30) Priorität: **18.06.82 CH 3762/82**

(43) Veröffentlichungstag der Anmeldung:
**04.01.84 Patentblatt 84/1**

(45) Bekanntmachung des Hinweises auf die Patenterteilung:
**28.01.87 Patentblatt 87/5**

(84) Benannte Vertragsstaaten:
**CH DE FR GB LI**

(56) Entgegenhaltungen:
**CH - A - 589 307**
**DE - A - 2 856 170**
**DE - A - 2 901 580**
**US - A - 4 043 636**
**US - A - 4 212 048**

**ELECTRONIC ENGINEERING, Vol. 46, No. 555, Mai 1974.**
**"The illumination of liquid crystal displays", Seite 17**
**IEEE TRANSACTIONS ON ELECTRON DEVICES, Vol.**
**ED-21, No. 2, Februar 1974. PAUL M. ALT et al.:**
**"Scanning Limitations of Liquid-Crystal Displays",**
**Seiten 146-155**

(73) Patentinhaber: **N.V. Philips' Gloeilampenfabrieken,**
**Groenewoudseweg 1, NL-5621 BA Eindhoven (NL)**

(72) Erfinder: **Streit, Peter, Dr., Haldenstrasse 36,**
**CH-8967 Widen (CH)**

(74) Vertreter: **Raap, Adriaan Yde et al, INTERNATIONAAL**
**OCTROOIBUREAU B.V. Prof. Holstlaan 6, NL-5656 AA**
**Eindhoven (NL)**

## Beschreibung

Die vorliegende Erfindung bezieht sich auf eine Flüssigkristallanzeigevorrichtung nach dem Oberbegriff des Anspruchs 1.

Aus «Electronic Engineering», Vol. 46, No. 555 (Mai 1974), Seite 17 sind verschiedene Beleuchtungsarten für Flüssigkristallanzeigen bekannt. Zunächst werden die direkte und die indirekte Beleuchtung von Anzeigen in Transmissionsbetrieb beschrieben. Um eine gute Beleuchtung zu erreichen, sollte der Einfallswinkel des Lichtes mit der Flächennormale nicht grösser als 45° gewählt werden, da sonst der Kontrast zu gering wird. Ein Einfallswinkel von 45° wird mittels einer Jalousie-Folie erreicht. Bei Reflexionsbetrieb ist die Anzeigevorrichtung in einer Vertiefung eingebaut und unmittelbar vor der Anzeigevorrichtung ist offensichtlich eine Streuschicht angeordnet. Hinter der Anzeige ist dann eine Reflektorschicht angebracht. Eine schwarze Platte ist betrachterseitig schräg über der Anzeige angeordnet, um störendes Streulicht zu absorbieren. Diese Anordnung wird z.B. bei elektronischen Rechern verwendet.

Diese Anzeige hat den Nachteil, dass sie eine ziemlich aufwendige Anordnung benötigt. Die Streuschicht verringert zudem den Kontrast beträchtlich und die schwarze Absorptionsplatte beschränkt den Sichtbetrieb nicht unwesentlich. Eine solche Anzeige weist ebenfalls niedrige Multiplex-Raten auf.

Aus der DE-A 2 856 170 ist eine weitere reflektive Flüssigkristallanzeige mit nur einem Linearpolarisator und einem internen diffus streuenden Reflektor bekannt. Dadurch dass der hintere Polarisator weggelassen wird, weist diese Anzeige eine vergrösserte Helligkeit auf, während die vollen Flächen beliebig gewünschter Elektrodensegmente zur Anzeige gebracht werden.

Aus IBM Technical Disclosure Bulletin, Vol. 20, No. 113 vom April 1978, ist eine multiplexierte Flüssigkristallanzeige mit grossem Sichtwinkel bekannt. Sie wird in Transmission betrieben. Diese Anzeigevorrichtung besitzt zwei Polarisatoren und eine dünne Streufolie, die auf der Betrachterseite angeordnet ist. Die Anzeige wird mit schräg einfallendem, quasi-parallelem Licht beleuchtet. Der Einfallswinkel 90°–δ des Lichtes mit der Flächennormale liegt bei etwa 20°.

Die beschriebenen, in Transmission betriebenen Flüssigkristallanzeigen haben verschiedene Nachteile. Als erstes wird die Lesbarkeit erheblich beeinträchtigt, wenn die Anzeige in Richtung der Beleuchtungsquelle betrachtet wird. Zweitens gibt es eine störende Parallaxe, weshalb der Einfallswinkel mit der Flächennormale nicht beliebig gross gewählt werden kann. Zudem weisen solche Vorrichtungen eine nicht besonders grosse Multiplex-Rate (bis etwa 1:30) auf. Die Verwendung einer Streufolie bewirkt, dass nur etwa die Hälfte des eingestrahlten Lichtes durchgelassen wird. Dadurch entsteht eine erhebliche Beeinträchtigung der Ablesbarkeit.

Die Erfindung stellt sich daher die Aufgabe, eine Flüssigkristallanzeigevorrichtung der vorgenannten Art derart zu verbessern, dass die Anzeige hoch multiplexierbar ist, einen optimalen Kontrast aufweist und in einem grossen Sichtwinkelbereich betrachtet werden kann.

Diese Aufgabe wird bei einer Flüssigkristallanzeigevorrichtung der vorgenannten Art durch die Merkmale des Anspruchs 1 gelöst.

Die Erfindung wird nun in einem Beispiel anhand von Zeichnungen näher erläutert.

Dabei zeigt:

Fig. 1 die prinzipielle Anordnung einer erfindungsgemässen Flüssigkristallanzeigevorrichtung;

Fig. 2 einen Bildschirm mit Beleuchtung für graphische Anzeigen;

Fig. 3 eine Oberansicht der Anordnung von Fig. 2 gemäss Schnitt A–A.

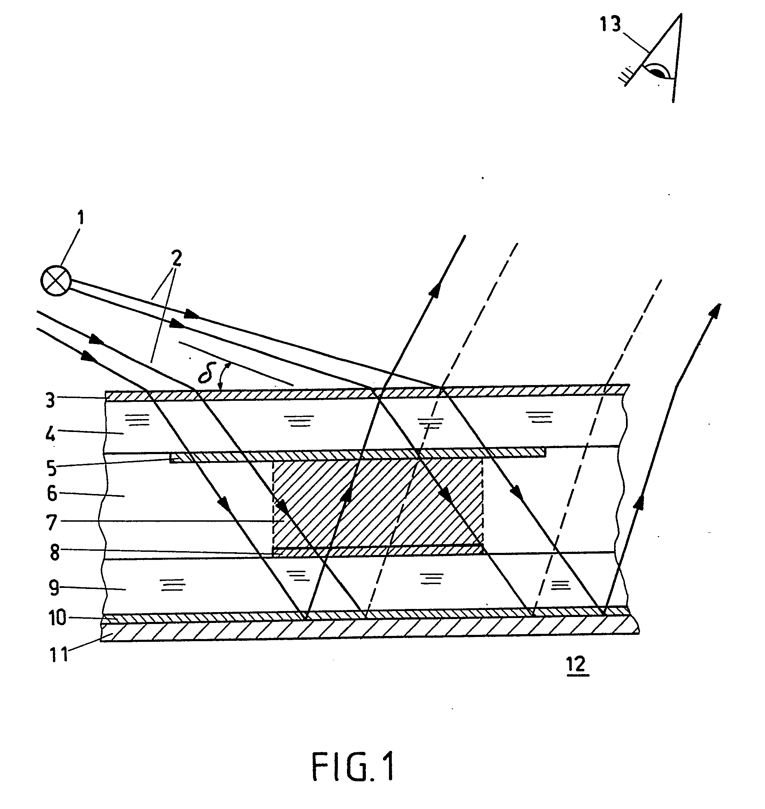

In Figur 1 ist eine Flüssigkristallzelle 12 mit einer Beleuchtungsquelle 1 dargestellt, welche die Anzeige mit quasi-parallelen Lichtstrahlen 2 unter einem mittleren Winkel 90°–δ zur Flächennormalen beleuchtet. Als quasi-parallel werden Lichtstrahlen bezeichnet, die eine Abweichung der Parallelität von bis zu etwa 10° besitzen. Die Zelle 12 besteht aus einem vorderen Linearpolarisator 3, einer vorderen Trägerplatte 4, einer hinteren Trägerplatte 9 und einem hinteren Linearpolarisator 10. Auf der Innenfläche der vorderen und hinteren Trägerplatte 4 und 9 sind eine vordere und hintere Elektrodenschicht 5 und 8 angeordnet. 7 bezeichnet den angesteuerten Bereich der Anzeige. Hinter der Zelle 12 ist ein Reflektor 11 angebracht.

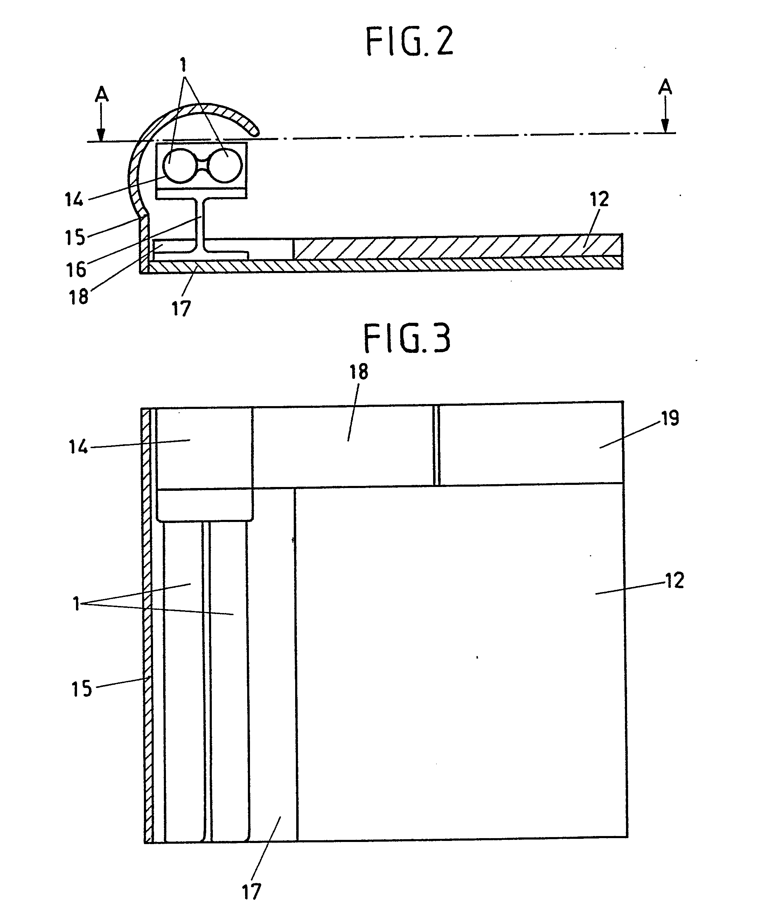

In Figur 2 und 3 ist eine Flüssigkristallzelle 12 als Bildschirm angeordnet. Die Beleuchtungsquelle 1 ist eine Gasentladungslampe, die von einem Starter 14 gezündet wird. Die Lampe 1 und der Starter 14 sind auf einem H-förmigen Trägerelement 16 montiert. Eine reflektierende Haube 15 ist so über der Lampe 1 angeordnet, dass die Anzeige mit quasi-parallelem Licht beleuchtet wird. Die ganze Anordnung ist auf einer Bodenplatte 17 montiert, worauf sich auch eine übliche elektronische Ansteuerschaltung 18 befindet, die bekannterweise in einem oder mehreren Bausteinen integriert angeordnet ist. Die Ansteuerschaltung 18 ist z.B. bekannt aus «Elektronik», 1974, Heft 5, Seiten 167–170, und beinhaltet zudem eine an sich bekannte Spannungsquelle. Neben der Ansteuerschaltung 18 befindet sich eine Schaltung 19 mit einem optischen Sensor.

Die prinzipielle Betriebsweise von Flüssigkristallanzeigen nach dem Drehzellenprinzip ist allgemein bekannt, z.B. aus «Physik in unserer Zeit», 1975, Nr. 3, Seiten 66–77. Erfindungsgemäss werden nun die Elektrodenschichten 5 und 8 mit einer Spannung unterhalb des 2,0fachen der Freedericksz-Schwellenspannung des Flüssigkristalls 6 angesteuert. Dabei ist der Flüssigkristall 6 nematisch und besitzt eine positive dielektrische Anisotropie. Die Freedericksz-Schwellenspannung $V_{th}$ wird ausführlich erklärt z.B. in Appl. Phys. Lett. 18 (1971) 127. Messtechnisch ergibt

sich $V_{th}$ als die Spannung, bei der gerade eine Änderung der kapazitiven Wirkung des Flüssigkristalls auftritt (vgl. Fig. 2 des Artikels). Bei geringfügig höheren Spannungen als $V_{th}$ wird aus einer spezifischen, durch die Orientierung der Grenzflächenmoleküle festgelegten Richtung eine optische Wirkung des Flüssigkristalls festgestellt. Diese Richtung besitzt eine starke Inklination zur Flächennormalen. Erst bei wesentlich höheren Spannungen als $V_{th}$ geht diese Wirkung graduell in eine in weiten Raumwinkelbereichen sichtbare über. Die Erfindung nutzt diese Eigenschaft der Drehzelle bei geringer Betriebsspannung aus. Das quasi-parallele, schräg einfallende Licht wird in dem angesteuerten Bereich 7 absorbiert, so dass auf dem Reflektor 11 ein sichtbares Schattenbild entsteht, wie in Figur 1 mit den Lichtstrahlen 2 dargestellt ist. Dabei wird die Anzeige genau aus der Richtung beleuchtet, aus der sonst bei diffuser Beleuchtung für den Betrachter optimaler Kontrast erreicht wird. Dies bedeutet nichts anders als eine interne Projektion des angesteuerten Bereiches 7, eine Art Strahlenumkehr. Wie das konoskopische Bild der Anzeige zeigt, ist der angesteuerte Bereich 7 in einem sehr grossen Sichtwinkelbereich nicht sichtbar. Die sonst störenden Parallelaxen treten deshalb überhaupt nicht mehr auf. Die Elektrodenschichten 5 und 8 sind dabei selbstverständlich aus einem transparenten Material hergestellt, z.B. aus $SnO_2$. Da die Verkippung der Moleküle des Flüssigkristalls 6 bei der erfindungsgemässen Betriebsspannung viel geringer ist als normal, können besonders hohe Multiplex-Raten (bis 1:120) erreicht werden. Der Einfallswinkel des Lichtes mit der Flächennormale der vorderen Trägerplatte 4 wird dann so gewählt, dass das Verhältnis zwischen der Steilheit der Kontrastkurve $\frac{dK}{dU}$ und der Spannung U im nicht-angesteuerten Zustand $U_{off}$ für den Flüssigkristall 6 maximal wird. Der Kontrast wird dabei mit K bezeichnet. Kontrastkurven für reflektive Anzeigen und elektronische Ansteuerungen für den Multiplexbetrieb sind z.B. bekannt aus «Electronic Application Bulletin» 35, No. 4 (Feb. 1979) 172–187. Der erfindungsgemässe Winkelbereich des Beleuchtungslichtes liegt daher zwischen 50° und 90° zur Normalen. Vorzugsweise ist aber der Bereich von 70° bis 80° zu wählen, da in diesem Bereich die Anforderungen an die Parallelität des Lichtes viel geringer sein dürfen und die Lichtquelle 1 die Anzeige trotzdem genügend gleichmässig ausleuchtet.

Eine Anzeige mit einem Bildschirm für graphische Zwecke ist in den Figuren 2 und 3 dargestellt. Der Bildschirm ist eine Matrixanzeigevorrichtung mit 200×400 Bildpunkten. Jeder Bildpunkt ist ein Quadrat mit einer Seite von 0,4 mm. Die gesamte Bildfläche beträgt deshalb $8×16 cm^2$. Als Flüssigkristall wird ZLI 1957 von der Firma E. Merck, Darmstadt (Deutschland) verwendet. Diese Substanz besitzt eine Freedericksz-Schwellenspannung von 1,45 Volt. Die Betriebsspannung wird dabei zwischen 2,0 und 2,1 Volt gewählt. Die Matrixelektroden werden angesteuert in der Art, wie aus «IEEE Transactions on Electron Devices», Vol. ED-21, No. 2 (Feb. 1974) 146–155 bekannt ist. Der Reflektor 11 hat ein Sägezahnmuster und ist an sich bekannt aus der DE-OS 2 901 580. Der dort beschriebene Neigungswinkel wird mittels der Formel $\alpha = (90°-\delta)/2$ berechnet, wobei $90°-\delta$ der Einfallswinkel des Lichtes mit der Flächennormale ist (Seiten 12–13, Fig. 9). Der Winkel o könnte aber auch dergestalt gewählt werden, dass der Winkel des reflektierten Lichtbündels 23 nicht mit der Flächennormale zusammenfällt. Dies ist der Fall bei Anzeigen, die nur schräg betrachtet werden können. Ein solcher Reflektor ist daher besonders geeignet für eine asymmetrische Beleuchtung wie in der Erfindung. Als Lichtquelle ist die Gasentladungslampe PL-11 W von der Firma Philips, Eindhoven (Niederlande) besonders geeignet. Sie ist 19 cm lang, 2,5 cm breit und 1,5 cm hoch. Der dazugehörige Starter 14 hat die Dimensionen $3×4×2 cm^3$ und wird von der Firma M. Hauri AG, Bischoffszell (Schweiz) hergestellt. Diese Lampe hat einen Energieverbrauch von 11 Watt und besitzt eine Brenndauer von 5000 Stunden. Die reflektierende Haube 15 ist in dem Bereich der Gasentladungslampe 1 als konkaver, metallischer Spiegel ausgebildet, so dass die Anzeige mit quasi-parallelem Licht beleuchtet wird. In diesem Fall ist der Einfallswinkel des Lichtes mit der Flächennormale 75°. Die elektronische Ansteuerschaltung 18 und die zugehörige Spannungsquelle sind allgemein bekannt, so dass diese hier nicht weiter erläutert werden. Die oben beschriebene, graphische Anzeige findet vor allem eine gute Verwendbarkeit im EDV-Bereich. Der Energieverbrauch einer solchen Anzeige ist wesentlich geringer als der der üblichen Datensichtgeräte, die mit Elektronenstrahlröhren arbeiten. Da die erfindungsgemässe Anzeige auch bei geringem störenden Umgebungslicht noch einen ausgezeichneten Kontrast aufweist, ist die Anzeige fast an jedem Arbeitsplatz sehr gut einsetzbar. Um die Bestrahlungsstärke des Umgebungslichtes zu erfassen, ist die Schaltung 19 mit einem optischen Sensor neben der elektronischen Ansteuerschaltung 18 vorgesehen. Bei zu stark störendem Umgebungslicht wird dann auf die normale Betriebsart umgeschaltet, indem die Beleuchtung abgeschaltet wird und die Betriebsspannung der Anzeige auf mindestens das 2,0fache der Freedericksz-Schwellenspannung erhöht wird. Die Anzeige ist dann nur relativ niedrig multiplexierbar. Eine solche, kombinierte Anzeige würde sich sehr gut eignen für das Instrumentenpaneel eines Autos.

Die Erfindung ist aber nicht beschränkt auf das angeführte Beispiel. Die Lichtquelle 1 könnte z.B. auch direkt mit einem Linearpolarisator überzogen werden, so dass das quasi-parallele Licht polarisiert ist. In diesem Falle entfällt der vordere Linearpolarisator 3 der Zelle 12 und es wird eine kratzfeste Frontseite der Anzeige erreicht. Eine solche Anwendung ist besonders geeignet für Anzeigen eines Instrumentenpaneels in Flugzeugen.

Obwohl die in dem Ausführungsbeispiel beschriebene Beleuchtungsart sich besonders eignet, ist doch die Erfindung nicht grundsätzlich darauf beschränkt. Z.B. könnte vor der Lichtquelle 1 auch eine Konvexlinse angebracht werden, wodurch ebenfalls quasi-paralleles Licht entsteht. Oder ein Konkavspiegel und eine Lichtquelle könnten auf den zwei verschiedenen Seiten der Anzeige angeordnet werden, wie dies skizzenhaft in «Electronic Engineering» Vol. 46, No. 555 (Mai 1974), Seite 17 angedeutet wird.

**Patentansprüche**

1. Multiplexierbare Flüssigkristallanzeigevorrichtung mit
– einer Zelle (12) mit zwei planparallelen, durchsichtigen Trägerplatten (4, 9), auf deren Innenflächen sich durchsichtige Elektrodenschichten (5, 8) befinden, zwischen denen die effektive Betriebsspannung in eingeschalteten Zustand unterhalb des 2,0fachen der Freedericksz-Schwellenspannung des Flüssigkristalls (6) liegt,
– einem in der Zelle (12) befindlichen, verdrillten nematischen Flüssigkristall (6) mit positiver, dielektrischer Anisotropie, und
– einer Lichtquelle (1), die in fester Ortsbeziehung zur Anzeige angeordnet ist, und die die Anzeige unmittelbar mit schräg einfallendem, quasi-parallelem Licht (2) beleuchtet, dadurch gekennzeichnet, dass
– zwei Linearpolarisatoren (3, 4) vorgesehen und diese gekreuzt zueinander orientiert sind,
– ein diffus streuender, metallischer Reflektor (11) hinter der Zelle (12) vorgesehen ist, und
– der Einfallswinkel des Lichtes (2) mit der Flächennormale der vorderen Trägerplatte (4) in dem Bereich von 50° bis 90° liegt, wobei die Einfallsrichtung des Lichtes (2) bezüglich dieses Winkels wie auch bezüglich des Azimutwinkels so gewählt ist, dass das einfallende Licht bei der genannten Betriebsspannung mit optimalem Kontrast moduliert wird.

2. Flüssigkristallanzeigevorrichtung nach Anspruch 1, dadurch gekennzeichnet, dass die Elektrodenschichten (5, 8) eine Matrixanordnung aufweisen.

3. Flüssigkristallanzeigevorrichtung nach einem der vorangehenden Ansprüche, dadurch gekennzeichnet, dass der Einfallswinkel des Lichtes (2) mit der Flächennormale der vorderen Trägerplatte (4) in dem Bereich von 70° bis 80° liegt.

4. Flüssigkristallanzeigevorrichtung nach einem der vorangehenden Ansprüche, dadurch gekennzeichnet, dass der Reflektor (11) ein Sägezahnmuster aufweist, wobei die lange Seite des Sägezahns der Lichtquelle (1) zugewendet ist.

5. Flüssigkristallanzeigevorrichtung nach einem der vorangehenden Ansprüche, dadurch gekennzeichnet, dass der Multiplexgrad grösser oder gleich 1:100 ist.

6. Flüssigkristallanzeigevorrichtung nach einem der vorangehenden Ansprüche, dadurch gekennzeichnet, dass die Betriebsspannung unterhalb des 1,6fachen der Freedericksz-Schwellenspannung des Flüssigkristalls (6) liegt.

7. Flüssigkristallanzeigevorrichtung nach einem der vorangehenden Ansprüche, dadurch gekennzeichnet, dass der vordere Linearpolarisator (3) sich auf der Lichtquelle (1) befindet und nicht auf der vorderen Trägerplatte (4) aufgebracht ist.

8. Flüssigkristallanzeigevorrichtung nach einem der vorangehenden Ansprüche, dadurch gekennzeichnet, dass die Betriebsspannung zwischen 2,0 und 2,1 Volt liegt und der Einfallswinkel des Lichtes (2) mit der Flächennormale der vorderen Trägerplatte (4) bei 75° liegt.

9. Flüssigkristallanzeigevorrichtung nach einem der vorangehenden Ansprüche, dadurch gekennzeichnet, dass die Beleuchtungsquelle (1) eine Gasentladungslampe mit elektrischer Leistung von kleiner oder gleich 20 Watt ist.

10. Flüssigkristallanzeigevorrichtung nach einem der vorangehenden Ansprüche, dadurch gekennzeichnet, dass eine Schaltung (19) mit einem optischen Sensor vorgesehen ist, die in Abhängigkeit von der Bestrahlungsstärke des Umgebungslichtes die Lichtquelle (1) abschaltet und die Betriebsspannung auf mindestens das 2,0fache der Freedericksz-Schwellenspannung erhöht.

**Claims**

1. A multiplexible liquid crystal display device comprising
– a cell (12) having two plane parallel transparent supporting plates (4, 9) whose inner faces are provided with transparent electrode layers (5, 8) between which the effective operating voltage in the switched-on condition is below twice the Freedericksz threshold voltage of the liquid crystal (6),
– a twisted, nematic liquid crystal (6) with a positive dielectric anisotropy present in the cell (12), and
– a light source (1) provided in a fixed place with respect to the display and directly illuminating the display with obliquely incident, quasi-parallel light (2), characterized in that
– two linear polarisers (3, 4) are provided which are crosswise oriented with respect to each other,
– a diffusely scattering metal reflector (11) is arranged behind the cell (12), and
– the angle of incidence of the light (2) with the face normal of the front supporting plate (4) is in the range between 50° and 90°, the direction of incidence of the light (2) with respect to this angle and to the azimuth angle being chosen to be such that the incident light is modulated with an optimal contrast at the said operating voltage.

2. A liquid crystal display device as claimed in Claim 1, characterized in that the electrode layers (5, 8) have a matrix arrangement.

3. A liquid crystal display device as claimed in any one of the preceding Claims, characterized in that the angle of incidence of the light (2) with respect to the face normal of the front supporting plate (4) is in the range from 70° to 80°.

4. A liquid crystal display device as claimed in any one of the preceding Claims, characterized in that the reflector (11) has a sawtooth pattern with the long side of the sawtooth facing the light source (1).

5. A liquid crystal display device as claimed in any one of the preceding Claims, characterized in that the multiplex ratio is larger than or equal to 1:100.

6. A liquid crystal display device as claimed in any one of the preceding Claims, characterized in that the operating voltage is below 1,6 times the Freedericksz threshold voltage of the liquid crystal (6).

7. A liquid crystal display device as claimed in any one of the preceding Claims, characterized in that the front linear polariser (3) is present on the light source (1) and is not provided on the front supporting plate (4).

8. A liquid crystal display device as claimed in any one of the preceding Claims, characterized in that the operating voltage is between 2.0 and 2.1 Volts and in that the angle of incidence of the light (2) with respect to the face normal of the front supporting plate (4) is at 75°.

9. A liquid crystal display device as claimed in any one of the preceding Claims, characterized in that the light source (1) is a gas discharge lamp having an electric power which is less than or equal to 20 Watts.

10. A liquid crystal display device as claimed in any one of the preceding Claims, characterized in that a circuit (19) is provided with an optical sensor which in dependence upon the lighting intensity of the ambient light switches off the light source (1) and increases the operating voltage to at least twice the Freedericksz threshold voltage.

## Revendications

1. Dispositif d'affichage à cristaux liquides pouvant être multiplexé et comportant
– une cellule (12) présentant deux plaques porteuses transparentes à faces parallèles (4, 9) sur les faces intérieures desquelles se trouvent des couches d'électrodes transparentes (5, 8), entre lesquelles, à l'étant enclenché, la tension de fonctionnement effective est inférieure à 2 fois la tension de seuil de Freedericksz du cristal liquide (6)
– un cristal liquide nématique torsadé (6), qui se trouve dans la cellule (12) et qui présente une anisotropie diélectrique positive et
– une source de lumière (1), qui est disposée à un endroit fixe par rapport à l'affichage et qui éclaire l'affichage de façon directe par de la lumière quasi-parallèle à incidence inclinée (2), caractérisé en ce que
– deux polariseurs linéaires (3, 4) sont prévus et orientés de façon croisé, l'un par rapport à l'autre,
– un réflecteur métallique à dispersion diffuse (11) est disposé derrière la cellule (12) et
– l'angle d'incidence de la lumière (2) par rapport à la normale à la surface de la plaque porteuse avant (4) se situe dans la gamme comprise entre 50° et 90°, la direction d'incidence de la lumière (2) par rapport à cet angle et par rapport à l'angle azimuth étant choisie de façon que la lumière incidente soit modulée avec un contraste optimal à ladite tension de fonctionnement.

2. Dispositif d'affichage à cristaux liquides selon la revendication 1, caractérisé en ce que la couche d'électrodes (5, 8) présente une disposition matricielle.

3. Dispositif d'affichage à cristaux liquides selon l'une des revendications précédentes, caractérisé en ce que l'angle d'incidence de la lumière (2) par rapport à la normale de surface de la plaque porteuse avant (4) se situe dans la gamme comprise entre 70° et 80°.

4. Dispositif d'affichage à cristaux liquides selon l'une des revendications précédentes, caractérisé en ce que le réflecteur (11) présente un échantillon en dents de scie, le côté long de la dent de scie se trouvant vis-à-vis de la source lumineuse (1).

5. Dispositif d'affichage à cristaux liquides selon l'une des revendications précédentes, caractérisé en ce que le degré multiplex est supérieur ou égal à 1:100.

6. Dispositif d'affichage à cristaux liquides selon l'une des revendications précédentes, caractérisé en ce que la tension de fonctionnement se situe au-dessous de 1,6 fois la tension de seuil de Freedericksz du cristal liquide (6).

7. Dispositif d'affichage à cristaux liquides selon l'une des revendications précédentes, caractérisé en ce que le polariseur linéaire avant (3) se trouve sur la source de lumière (1) et n'est pas appliqué sur la plaque porteuse avant (4).

8. Dispositif d'affichage à cristaux liquides selon l'une des revendications précédentes, caractérisé en ce que la tension de fonctionnement se situe entre 2,0 et 2,1 volts et l'angle d'incidence de la lumière (2) par rapport à la surface de la plaque porteuse avant (4) se situe à 75°.

9. Dispositif d'affichage à cristaux liquides selon l'une des revendications précédentes, caractérisé en ce que la source d'éclairage 1 est une lampe à décharge dans le gaz présentant une puissance électrique inférieure ou égale à 20 watts.

10. Dispositif d'affichage à cristaux liquides selon l'une des revendications précédentes, caractérisé en ce qu'un circuit (19) présentant un capteur optique est prévu et déclenche la source de lumière (1) en dépendance de l'intensité de rayonnement de la lumière ambiante et augmente la tension de fonctionnement à au moins 2,0 fois la tension de seuil de Freedericksz.

FIG.1

# FIG.2

# FIG.3